(19) **Europäisches Patentamt**
**European Patent Office**
**Office européen des brevets**

(11) **EP 2 446 523 B1**

(12) **FASCICULE DE BREVET EUROPEEN**

(45) Date de publication et mention
de la délivrance du brevet:
**03.04.2013 Bulletin 2013/14**

(21) Numéro de dépôt: **10725413.8**

(22) Date de dépôt: **10.06.2010**

(51) Int Cl.:
*H02K 35/02* (2006.01)    *H02N 1/08* (2006.01)
*H01L 41/113* (2006.01)

(86) Numéro de dépôt international:
**PCT/EP2010/058185**

(87) Numéro de publication internationale:
**WO 2010/149503 (29.12.2010 Gazette 2010/52)**

(54) **DISPOSITIF MICROMECANIQUE D'AMPLIFICATION D'UN MOUVEMENT VIBRATOIRE**

MIKROMECHANISCHE VORRICHTUNG ZUR VERSTÄRKUNG EINER VIBRATIONSBEWEGUNG

MICROMECHANICAL DEVICE FOR AMPLIFYING A VIBRATING MOVEMENT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **23.06.2009 FR 0903020**

(43) Date de publication de la demande:
**02.05.2012 Bulletin 2012/18**

(73) Titulaire: **Commissariat à l'Énergie Atomique et aux Énergies Alternatives**
**75015 Paris (FR)**

(72) Inventeur: **DESPESSE, Ghislain**
**F-38120 Saint Egreve (FR)**

(74) Mandataire: **Colombo, Michel et al**
**Brevinnov**
**324, rue Garibaldi**
**F-69007 Lyon (FR)**

(56) Documents cités:
**WO-A1-2006/046937     WO-A2-2008/005113**
**US-A1- 2009 085 442**

- KULAH H ET AL: "Energy Scavenging From Low-Frequency Vibrations by Using Frequency Up-Conversion for Wireless Sensor Applications" IEEE SENSORS JOURNAL, IEEE SERVICE CENTER, NEW YORK, NY, US, vol. 8, no. 3, 1 mars 2008 (2008-03-01), pages 261-268, XP011203810 ISSN: 1530-437X
- D-G LEE ET AL: "Novel Micro Vibration Energy Harvesting Device using Frequency Up Conversion" SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10 juin 2007 (2007-06-10), pages 871-874, XP031216169 ISBN: 978-1-4244-0841-2
- S. G. BURROW, L. R. CLARE, A. CARRELLA, AND D. BARTON: "Vibration energy harvesters with non-linear compliance" SPIE, PO BOX 10 BELLINGHAM WA 98227-0010 USA, vol. 6928, 4 avril 2008 (2008-04-04), pages 692807-1-692807-10, XP040436050
- J. LOVERICH, R. GEIGER, AND J. FRANK: "Stiffness nonlinearity as a means for resonance frequency tuning and enhancing mechanical robustness of vibration power harvesters" SPIE, PO BOX 10 BELLINGHAM WA 98227-0010 USA, vol. 6928, 4 avril 2008 (2008-04-04), XP040436048

Printed by Jouve, 75001 PARIS (FR)

**Description**

L'invention concerne l'amplification d'un mouvement vibratoire, en particulier en vue de convertir une énergie vibratoire en énergie électrique.

Dans certains environnements, il peut être délicat de connecter un circuit électrique à des câbles d'alimentation, par exemple dans des milieux hostiles ou sur des mécanismes en mouvement. Pour pallier à ce problème, des dispositifs micromécaniques de conversion d'énergie vibratoire en énergie électrique sont connus. Ces dispositifs forment des microsystèmes généralement accolés sur des supports vibrants, tels que des machines ou des véhicules. Selon une technique connue, on utilise un système résonant pour amplifier une vibration mécanique d'un support et convertir le mouvement amplifié en électricité.

Un système résonant est généralement constitué d'une masse mobile m rattachée à un support par un ressort de raideur k. Le système résonne alors à la fréquence de résonance f, donnée par :

$$f_r = \sqrt{k/m}$$

Lorsque le support subit une vibration à cette fréquence, la masse mobile se met aussi à osciller à cette fréquence avec une amplitude qui croit jusqu'à ce que l'amortissement mécanique dissipe exactement l'équivalent de l'énergie mécanique apportée à chaque cycle : l'énergie dissipée croit en effet plus vite que l'énergie apportée lors de l'accroissement de l'amplitude, et finit par l'égaler. Si l'amortissement mécanique est relativement faible (facteur de qualité mécanique élevé), l'amplification mécanique peut être de plusieurs centaines (amplitude du déplacement de la partie mobile par rapport à l'amplitude du déplacement du support). Plus l'amplification mécanique est importante, plus l'énergie transmise par le support vibrant à la partie mobile est importante. En utilisant un amortissement électrique de façon prépondérante, une excitation de la masse à la fréquence de résonance permet de maximiser l'énergie électrique extraite par rapport à la vibration d'entrée.

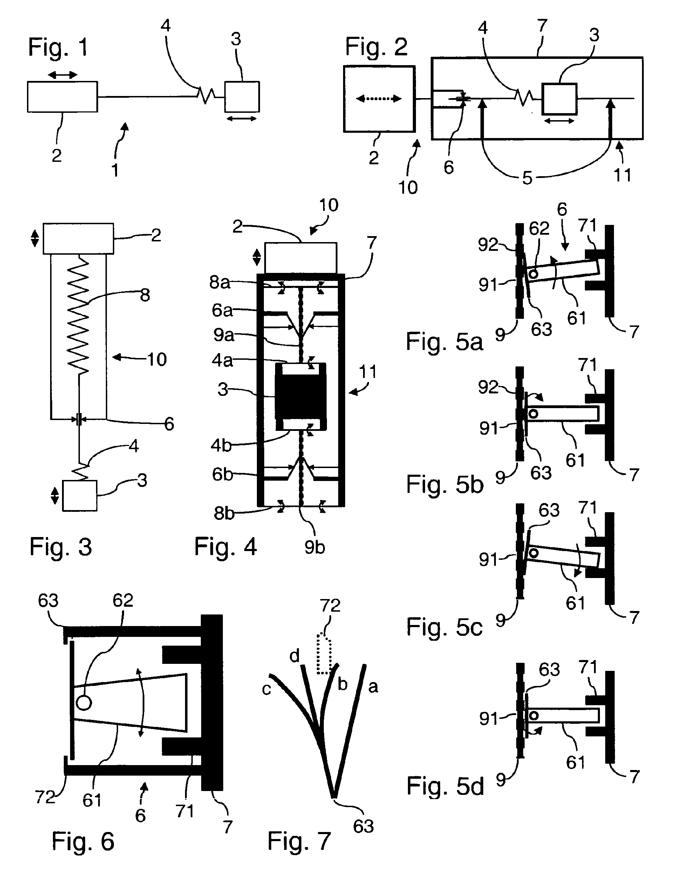

Pour mieux identifier l'augmentation de l'énergie absorbée à chaque cycle au fur et à mesure des cycles, prenons le cas d'un système résonant 1 tel que présenté sur la Figure 1, en l'absence d'amortissement, et en supposant que le mouvement du support est quasiment insensible à la présence de la masse et du ressort, avec :

ΔV le gain en vitesse de la masse mobile 3, en valeur absolue, de la partie mobile à chaque demi-période ;
m la masse de la masse mobile 3
f la fréquence de vibration imposé au support 2;
fr en Hz la fréquence de résonance de la structure masse 3 + ressort 4, égale à f ;
$Vm_0$ la vitesse initiale de la masse 3 ;

L'énergie cinétique de la masse est donc initialement de :

$$\frac{1}{2} m V_{m0}^2$$

Après une demi-période, l'énergie cinétique de la masse est alors de :

$$\frac{1}{2} m \left( V_{m0} + \Delta V \right)^2$$

Après une période complète, l'énergie cinétique de la masse est de :

$$\frac{1}{2} m \left( V_{m0} + 2\Delta V \right)^2$$

Le gain d'énergie cinétique de la masse est alors de :

$$\Delta E = \frac{1}{2} m \left( \Delta V^2 + 2 V_{m0} \Delta V \right)$$

Cependant, dès que la fréquence de la vibration s'éloigne de la fréquence de résonance, les déplacements relatifs de la masse et du support sont la majeure partie du temps déphasés. Le facteur de qualité mécanique baisse, ce qui induit une baisse de la quantité d'énergie électrique qui peut être générée.

Pour pallier à ce problème, il est connu d'utiliser une série de systèmes résonants présentant des fréquences de résonance distinctes. On peut ainsi générer une quantité d'énergie électrique suffisante pour une plage de fréquence vibratoire fortement élargie. Cependant, seule une structure résonante peut être excitée en simultané, ce qui rend une telle structure relativement volumineuse pour la quantité d'énergie qu'elle permet de générer.

Il est également connu du document FR20055181 d'utiliser un système résonant muni d'un ressort dont le comportement est non linéaire. Le système présente une fréquence de résonance augmentant avec l'amplitude du déplacement entre la masse et le support. La fréquence de résonance du système se déplace cependant et est toujours décalée par rapport à la fréquence d'excitation de la vibration. Par conséquent, l'amplification liée à la résonance reste toujours relativement limitée. La publication "Energy Scavenging From Low-Frequency Vibrations by Using Frequency Up-Conversion for Wireless Sensor Applications" (IEEE SENSORS JOURNAL, VOL. 8, NO. 3, MARCH 2008) divulgue un dispositif micromécanique d'amplification comportant un organe d'accouplement d'une masse mobile.

L'invention vise à résoudre un ou plusieurs de ces inconvénients. L'invention porte ainsi sur un dispositif micromécanique d'amplification d'un mouvement vibratoire, comprenant :

- une interface de solidarisation du dispositif à un organe vibrant;
- une masse montée mobile selon au moins un degré de liberté par rapport à l'interface ;
- un ressort apte à exercer une sollicitation de rappel entre la masse mobile et l'interface;
- un organe de détection de l'orientation de déplacement de l'interface selon ledit degré de liberté ;
- un organe d'accouplement de la masse mobile à l'interface, configurée pour accoupler la masse mobile à l'interface lorsque l'orientation de déplacement de l'interface est opposée à celle de la masse mobile et configurée pour désaccoupler la masse mobile de l'interface avant un changement d'orientation de l'interface et lorsque l'orientation de déplacement de l'interface est identique à celle de la masse mobile.

Selon une variante, le dispositif comprend un organe de détection d'une vitesse maximale de l'interface, et l'organe d'accouplement est configuré pour accoupler la masse mobile à l'interface lorsque l'interface atteint sa vitesse maximale.

Selon encore une variante, l'organe de détection de l'orientation de déplacement et/ou l'organe de détection de la vitesse maximale comprennent un accéléromètre, l'organe d'accouplement comprend un actionneur à commande électrique, le dispositif comprenant en outre un dispositif de traitement commandant l'actionneur en fonction de mesures fournies par l'accéléromètre.

Selon une autre variante, la vitesse maximale est détectée en fonction de la croissance ou de la décroissance de l'accélération lors de son passage par une valeur nulle.

Selon encore une autre variante, la masse est mobile en translation par rapport à l'interface, l'organe d'accouplement comprend une masselotte montée pivotante par rapport à un axe perpendiculaire à l'axe de translation de la masse avec un balourd, la masselotte étant montée pivotante entre deux positions dans lesquelles la masse est accouplée à l'interface pour des orientations respectives du déplacement de la masse par rapport à l'interface.

Selon une variante, l'interface et la masse mobile présentent des surfaces conductrices rainurées en vis-à-vis pour former une capacité, le dispositif comprenant un circuit de commande appliquant sélectivement une tension entre les surfaces rainurées pour accoupler ou désaccoupler l'interface et la masse mobile.

Selon encore une variante, le circuit de commande est configuré pour décharger et stocker sélectivement la charge incluse dans la capacité formée.

Selon une autre variante, la masse est mobile en translation par rapport à l'interface, l'organe d'accouplement comprend un élément piézoélectrique commandé pour s'allonger selon une direction perpendiculaire à la direction de déplacement de la masse de façon à accoupler la masse à l'interface.

Selon encore une autre variante, l'élément piézoéiectrique s'étend selon une direction perpendiculaire à la direction de déplacement de la masse et est flexible de façon à former ledit ressort durant l'accouplement.

Selon une variante, l'interface, la masse et le ressort comprennent un élément commun formé monobloc dans un substrat de silicium.

Selon encore une variante, la masse comprend un élément rapporté fixé sur l'élément monobloc.

Selon une autre variante, le ressort est formé par une poutre flexible ménagée dans l'élément monobloc.

Selon encore une autre variante, la masse présente une partie d'accouplement munie d'une alternance d'encoches et de renflements, l'organe d'accouplement comprend un actionneur s'insérant dans une encoche de la partie d'accouplement durant un accouplement.

Selon une variante, le dispositif comprend un organe de conversion de l'énergie mécanique de la masse mobile en énergie électrique.

L'invention porte également sur un système comprenant un dispositif micromécanique d'amplification tel que décrit ci-dessus et un support vibrant solidaire de l'interface du dispositif micromécanique, l'organe vibrant présentant une masse au moins 50 fois supérieure à celle du dispositif micromécanique.

L'invention porte en outre sur un procédé d'amplification du mouvement d'un organe vibrant par un dispositif micromécanique, comprenant les étapes consistant à :

- fournir un dispositif micromécanique muni d'une masse mobile selon au moins un degré de liberté par rapport à l'organe vibrant et muni d'un ressort apte à exercer une sollicitation de rappel entre la masse mobile et l'organe vibrant ;
- détecter l'orientation de déplacement de l'organe vibrant selon ledit degré de liberté ;
- accoupler la masse mobile à l'organe vibrant lorsque l'orientation de déplacement de l'organe vibrant est opposée à celle de la masse mobile et désaccoupler la masse mobile de l'organe vibrant avant un changement d'orientation de l'organe vibrant et lorsque l'orientation de déplacement de l'organe vibrant est identique à celle de la masse mobile.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un système résonant ;
- la figure 2 est une représentation schématique d'un dispositif d'amplification de vibration selon un exemple de mise en oeuvre de l'invention ;
- la figure 3 est une représentation schématique d'un dispositif d'amplification de vibration selon une première variante ;
- la figure 4 est une représentation schématique d'un dispositif d'amplification selon une deuxième variante ;
- les figures 5a à 5d représentent différentes positions d'un dispositif d'accouplement inertiel durant son fonctionnement ;
- la figure 6 est une représentation schématique d'une variante de dispositif d'accouplement inertiel ;
- la figure 7 représente différentes positions d'une languette du mécanisme de la figure 6 ;
- la figure 8 est une vue de côté d'un dispositif d'amplification de vibration selon une troisième variante ;
- les figures 9a à 9e représentent schématiquement un dispositif d'amplification de vibration selon une quatrième variante à différentes étapes de son fonctionnement ;
- les figures 10 et 11 représentent des alternatives de circuits de commande de bilames piézoélectriques ;
- les figures 12a à 12e représentent schématiquement un dispositif d'amplification de vibration selon une cinquième variante à différentes étapes de son fonctionnement ;
- la figure 13 est une vue en coupe d'un dispositif d'amplification de vibration selon une sixième variante ;
- la figure 14 est une vue de dessus d'un dispositif d'amplification de vibration selon une septième variante ;
- la figure 15 est une vue de dessus d'un dispositif d'amplification de vibration selon une huitième variante ;
- les figures 16 à 20 représentent schématiquement différents mécanismes d'accouplement.

L'invention propose de réaliser un dispositif micromécanique pseudo-résonant d'amplification d'un mouvement vibratoire. Le dispositif comprend une masse mobile par rapport à un organe vibrant. Un ressort exerce une sollicitation de rappel entre la masse mobile et l'organe vibrant. On détermine l'orientation de déplacement de l'organe vibrant. On accouple l'organe vibrant et la masse mobile lorsque l'organe vibrant se déplace selon une orientation inverse de celle de la masse mobile. On désaccouple l'organe vibrant et la masse mobile avant un changement d'orientation de l'organe vibrant lorsque cet organe vibrant se déplace dans la même direction que la masse mobile.

Ainsi, l'organe vibrant pourra accroître l'énergie cinétique de la masse mobile même lorsque la fréquence vibratoire est éloignée de la fréquence de résonance de la masse et du ressort. Le dispositif permet ainsi d'apporter une plus grande énergie cinétique à la masse mobile sur une plage de fréquence de vibration très importante, tout en conservant la compacité d'un dispositif micromécanique. L'invention s'avère particulièrement avantageuse lorsque l'organe vibrant présente une fréquence vibratoire fortement variable.

La figure 2 représente schématiquement un système résonant 10 destiné à mettre en oeuvre l'invention. Le système résonant 10 comprend un support vibrant 2 et un dispositif micromécanique d'amplification de mouvement vibratoire 11. Le support vibrant 2 présente soit une masse très supérieure à celle du dispositif d'amplification 11, soit est solidaire d'une source de vibrations sur lesquelles l'absorption d'énergie par le dispositif d'amplification 11 est négligeable. Le support 2 comprend au moins une composante vibratoire selon la direction indiquée par la flèche en pointillés. Un accéléromètre non représenté mesure l'accélération du support 2. À partir des mesures de l'accéléromètre, on détermine l'orientation du déplacement instantané du support 2 selon sa direction de vibration. Le signe de la dérivée de l'accélération permet notamment de déterminer l'orientation du déplacement du support 2. Le changement de signe de l'accélération permet quand à lui de déterminer l'instant du passage par une vitesse maximale ou minimale. Après un changement de signe, le nouveau signe de l'accélération permet de déterminer s'il s'agit d'un minimum ou d'un maximum de vitesse (avec z désignant la position du support 2, z"=0 =>extrema de z', z" passe de 0- à $0^+$ => minima de z', z" passe de $0^+$ à 0- => maxima de z').

Le dispositif d'amplification 11 comprend un boîtier 7 formant une interface de solidarisation avec le support vibrant 2. Le boîtier 7 est fixé par tous moyens appropriés au support 2. Le boîtier 7 inclut une masse mobile 3 solidaire d'une première extrémité d'un ressort de rappel 4. Des tiges non référencées sont solidarisées respectivement à la deuxième extrémité du ressort de rappel 4 et à la masse mobile 3. Ces tiges sont guidées en translation par des portées 5 selon une direction illustrée par la flèche en traits pleins, colinéaire à la direction de vibration du support 2. Un organe d'accouplement 6 permet d'accoupler sélectivement l'ensemble formé de la masse 3 et du ressort 4 au boîtier 7.

Par principe, l'organe d'accouplement 6 est commandé pour accoupler l'ensemble masse 3 ressort 4 au boîtier 7 lorsque l'orientation de la vitesse du support 2 est opposée à l'orientation de la vitesse de la masse 3. On force ainsi la masse 3 à changer d'orientation. L'énergie cinétique de la masse 3 est ainsi accrue lors de l'accouplement. Lorsque la masse 3 et le support 2 se déplacent ensuite selon la même orientation, l'organe d'accouplement 6 est commandé pour désaccoupler l'ensemble masse 3 ressort 4 du boîtier 7. Le désaccouplement doit notamment intervenir avant un changement d'orientation du déplacement du support 2 ou de la masse 3. On évite ainsi que le support 2 ne freine le mouvement de la masse 3 en absorbant son énergie cinétique. La durée d'accouplement est donc inférieure à une demie période de vibration du support 2 et très avantageusement égale à une demie période de résonance de l'ensemble masse 3 ressort 4. En pratique on choisit une fréquence de résonance telle que la demi-période de résonance soit plus petite que la plus grande demi-période de vibration du support 2, ce qui revient à choisir une fréquence de résonance de l'ensemble masse 3 ressort 4 supérieure à la fréquence maximale du support 2. Avantageusement, l'accouplement aura lieu lorsque le support 2 atteint sa vitesse maximale (en valeur absolue) afin de transférer un maximum d'énergie cinétique à la masse mobile 3. Le désaccouplement se faisant une demi-période de résonance de l'ensemble masse 3 ressort 4 plus tard, demi-période avantageusement courte par rapport à la demi-période de vibration du support 2. La vitesse atteint un extremum (vitesse maximale ou minimale) lorsqu'on détectera une accélération nulle du support 2.

On peut déduire l'orientation du déplacement de la masse 3 pour l'accouplement de la façon suivante : la fréquence de résonance étant déterminable à partir de la masse mobile 3 et de la raideur du ressort 4, on peut aisément déterminer à quel instant l'orientation du déplacement de la masse 3 changera. En fait, le sens de déplacement de la masse 3, change après chaque accouplement. Si on connait le sens initial et que l'on compte le nombre d'accouplements (en changeant par exemple l'état d'un registre pair/impair à chaque accouplement), on peut en déduire le sens de déplacement en cours. On peut également munir la masse 3 d'un accéléromètre (non illustré) pour déterminer l'orientation de son déplacement.

L'organe d'accouplement 6 peut procéder à cet accouplement par serrage de la tige solidaire du ressort 4. L'accouplement peut également être réalisé par tout moyen approprié, par l'intermédiaire d'un actionneur électromagnétique, d'un actionneur électrostatique, d'un actionneur thermique ou d'un actionneur piézoélectrique. L'organe d'accouplement 6 peut être commandé par un dispositif de commande électronique non représenté connecté à l'accéléromètre du boîtier 7.

La figure 3 représente schématiquement une variante de système pseudo résonant 10 selon invention. Dans cet exemple, l'ensemble masse 3 ressort 4 est guidé en translation par rapport au support 2 par l'intermédiaire d'un ressort secondaire 8. Une tige raccorde le ressort 4 à une extrémité du ressort secondaire 8. L'autre extrémité du ressort secondaire 8 est fixée sur le support 2. Le ressort 8 assure un guidage en translation de la masse 3 lorsque son axe est vertical. Une autre fonction du ressort secondaire 8 est de replacer en moyenne la masse 3 au milieu de sa course de déplacement et de limiter l'amplitude de cette course. L'organe d'accouplement 6 accouple ou désaccouple sélectivement le support 2 à la tige joignant les ressorts 4 et 8.

Le ressort secondaire 8 présente une raideur k2 très inférieure à la raideur k1 du ressort 4. Le système incluant la masse 3 et le ressort 4 présente alors une première fréquence de résonance fr1 durant l'accouplement et une deuxième fréquence de résonance fr2 durant le désaccouplement. Les première et deuxième fréquences de résonance satisfont aux relations suivantes :

$$f_r = f_{r1} = \sqrt{k_1/m}$$

$$f_r = f_{r2} = \sqrt{\frac{k1k2}{k1+k2}/m} \cong \sqrt{k_2/m}$$

Par conséquent, la masse 3 ne changera pas d'orientation durant le désaccouplement si la fréquence de vibration du support 2 est supérieure à la fréquence de résonance fr2. De plus, la présence du ressort secondaire 8 ne modifie quasiment pas la première fréquence de résonance et la durée pendant laquelle la masse 3 peut être accouplée au support 2.

La figure 4 représente en vue de dessus une autre variante de système résonant 10, particulièrement adaptée pour être réalisée dans une structure en silicium. Le dispositif d'amplification des mouvements vibratoires 11 comprend un cadre 7 solidaire du support 2. Une masse 3 est montée mobile dans le cadre 7, selon une direction correspondant à une composante des vibrations du support 2. Des ressorts de rappel 4a et 4b sont ménagés sous forme de poutres au niveau d'extrémités opposées de la masse 3. Les ressorts 4a et 4b sont fixés de façon encastrée dans la masse 3 à leurs extrémités. Des tiges 9a et 9b sont solidaires par une extrémité respectivement des ressorts 4a et 4b. Les tiges 9a et 9b sont fixées de façon encastrée dans la partie médiane des ressorts 4a et 4b. Un mouvement relatif entre la masse 3 et une tige 9a ou 9b induit une flexion des poutres formant les ressorts 4a et 4b. Le dispositif d'amplification comprend également des ressorts secondaires 8a et 8b encastrés dans leur partie médiane avec une autre extrémité respectivement des tiges 9a et 9b. Les ressorts secondaires 8a et 8b sont encastrés par leurs extrémités dans le cadre 7. Les ressorts secondaires 8a et 8b présentent une raideur très inférieure à celle des ressorts de rappel 4a et 4b. Les ressorts secondaires 8a et 8b sont dédoublés et disposés de part et d'autre de la masse 3 afin d'assurer son guidage en translation par rapport au cadre 7.

Deux organes d'accouplement 6a et 6b sont disposés de part et d'autre de la masse 3. Les organes d'accouplement 6a et 6b présentent des languettes actionnées pour s'insérer dans des encoches ménagées dans les tiges 9a et 9b. Lorsque les languettes s'insèrent dans les encoches, les tiges 9a et 9b sont immobilisées par rapport au cadre 7. Les languettes sont solidaires du support encastré dans le cadre 7. Le déplacement des languettes est avantageusement réalisé par l'intermédiaire d'actionneurs commandés électriquement.

Selon une variante, les ressorts sous forme de poutres 4a et 4b peuvent être supprimés et les tiges 9a et 9b sont alors encastrées directement dans la masse 3. Des poutres supportant les languettes des organes d'accouplement 6a et 6b peuvent être amincies afin d'être déformables et de former des ressorts de rappel lorsque les languettes s'accouplent avec les tiges 9a et 9b.

La structure du dispositif d'amplification 11 de la figure 4 peut être réalisée par gravure d'une plaque de silicium. En effet, les différents éléments mécaniques du dispositif 11 peuvent être réalisés monobloc par gravure dans l'épaisseur d'une plaque de silicium. La raideur de chacun des ressorts pourra notamment être définie en réalisant des poutres plus ou moins larges.

Le dispositif d'amplification pourra être réalisé par gravure d'un substrat de silicium dans lequel l'accéléromètre est réalisé. On pourra ainsi réduire l'encombrement du dispositif et améliorer son facteur de qualité. Plus ce facteur de qualité sera élevé, plus la masse mobile nécessaire pour générer une quantité d'énergie donnée sera réduite.

L'organe d'accouplement 6 peut également fonctionner de façon inertielle, sans faire appel à un circuit électronique de commande. Les figures 5a à 5d illustrent un organe d'accouplement 6 dans différentes positions par rapport à une tige 9 solidaire de la masse. L'organe d'accouplement 6 comprend une masselotte 61, une tige de guidage en rotation 62 et une languette de blocage 63. La languette 63 est fixée à la masselotte 61. La tige 62 guide l'organe d'accouplement 6 en rotation autour d'un axe perpendiculaire à la direction de déplacement de la masse 3. La tige 62 est disposée à proximité de la jonction entre la masselotte 61 et la languette 63, de sorte qu'un balourd important est généré autour de l'axe 62.

Le cadre 7 comprend un logement 71 dans lequel l'extrémité distale de la masselotte 61 est disposée avec un certain jeu. Par ailleurs, la tige 9 présente une série d'encoches 91 permettant l'accouplement entre la tige 9 et l'organe d'accouplement 6 lorsqu'une languette 63 s'insère dans une encoche 91, et la libération de la languette 63 par certains mouvements de la tige 9.

À la figure 5a, on suppose que le support et le cadre 7 se déplacent vers le haut, alors que la tige 9 et la masse se déplacent vers le bas. Après que la vitesse de déplacement du cadre 7 ait atteint un maximum, le cadre 7 commence sa décélération. Du fait de son énergie cinétique, l'organe d'accouplement 6 a tendance à conserver une vitesse supérieure à celle du cadre 7 durant la décélération. Du fait du balourd, la masselotte 61 bascule autour de l'axe 62 comme illustré par la flèche. Lors de ce basculement, une extrémité de la languette 63 s'insère dans une encoche 91. L'orientation opposée des mouvements tend à enfoncer la languette 63 dans l'encoche 91. Dès lors, la tige 9 est accouplée au cadre 7 et se déplace selon la même orientation que le cadre, c'est-à-dire vers le haut. Les parois latérales du logement 71 limitent la course en rotation de la masselotte 61.

À la figure 5b, la tige 9 poursuit sa course vers le haut. Le cadre 7 atteint une vitesse nulle puis change d'orientation de déplacement et initie une course vers le bas. Les renflements 92 délimitant les encoches 91 appuient sur la languette 63 durant le déplacement vers le haut de la tige 9. Ainsi, la languette 63 sort de son encoche 91 ce qui désaccouple la tige 9 du cadre 7.

À la figure 5c, le cadre 7 se déplace initialement vers le bas tandis que la tige 9 se déplace initialement vers le haut. La vitesse de déplacement du cadre 7 atteint un maximum et le cadre 7 commence sa décélération. Du fait de son énergie cinétique, l'organe d'accouplement 6 a tendance à conserver une vitesse supérieure à celle du cadre 7 durant la décélération. Du fait du balourd, la masselotte 61 bascule autour de l'axe 62 comme illustré par la flèche. Lors de ce basculement, une extrémité de la languette 63 s'insère dans une encoche 91. Dès lors, la tige 9 est accouplée au cadre 7 et se déplace selon la même orientation que le cadre, c'est-à-dire vers le bas.

À la figure 5d, la tige 9 poursuit sa course vers le bas. Le cadre 7 atteint une vitesse nulle puis change d'orientation de déplacement et initie une course vers le haut. Les renflements 92 délimitant les encoches 91 appuient sur la languette 63 durant le déplacement vers le bas de la tige 9. Ainsi, la languette 63 sort de son encoche 91 ce qui désaccouple la tige 9 du cadre 7.

Ce mécanisme permet avantageusement d'accoupler la tige 9 au cadre 7 lorsque sa vitesse est maximale. De plus, ce mécanisme permet de désaccoupler la tige 9 du cadre 7 lors d'une inversion de sens. Par ailleurs, ce mécanisme permet d'éliminer la complexité d'une commande électronique de l'accouplement.

Pour optimiser le fonctionnement de ce mécanisme d'accouplement 6, il est souhaitable que le pas entre les encoches 91 soit très faible par rapport à l'amplitude moyenne de la vibration du support (par exemple inférieur à 10 % de cette amplitude). De plus, la course en rotation de la masselotte 61 est avantageusement très faible par rapport à l'amplitude de la vibration du support, de façon à ce qu'elle serve essentiellement à détecter l'orientation du déplacement du support et sa décélération. La languette 63 est avantageusement réalisée pour limiter l'amortissement mécanique lors de l'accouplement. De plus, la languette 63 est avantageusement réalisée de façon à limiter le frottement sur la tige 9 afin d'améliorer le facteur de qualité du dispositif d'amplification 11.

La figure 6 illustre une variante du dispositif d'accouplement inertiel. Dans cette variante, le cadre 7 présente des saillies 72 disposées au niveau des extrémités d'une languette flexible 63. Ces saillies 72 sont destinées à interférer avec la languette 63 lors des mouvements en rotation de la masselotte 61. La figure 7 illustre différentes positions de la languette 63 par rapport à une saillie 72 durant une rotation de la masselotte 61. Dans la position illustrée par a, la masselotte 61 initie une rotation qui rapproche l'extrémité de la languette 63 de la saillie 72. Dans la position illustrée par b, la masselotte 61 amène la languette 63 en contact avec la saillie 72. Alors que la masselotte 61 poursuit son mouvement en rotation, la languette 63 est retenue par la saillie 72 et fléchit en stockant une énergie élastique. Dans la position illustrée par c, lorsque la masselotte 61 a suffisamment tourné, la languette 63 franchit l'obstacle formé par la saillie 72. Le mouvement de la languette 63 en direction d'une tige munie d'encoches est fortement accéléré du fait de l'énergie élastique préalablement stockée. Ainsi, une pénétration rapide de l'extrémité de la languette 63 dans une encoche 91 est garantie.

Par ailleurs, les saillies 72 permettent de maintenir la languette 63 écartée des renflements en position de désaccouplement, afin d'éviter des frottements. La position c de blocage n'est atteinte que grâce à l'énergie élastique de flexion préalablement stockée dans la languette 63 avant le franchissement de la saillie 72. Lorsque la tige 9 finit par repartir dans le sens du boitier 7, la languette 63 ressort de l'encoche 91 avec une énergie cinétique/potentielle amoindrie la ramenant dans une position d'équilibre d éloignée de la tige, limitant tous risques de frottement.

Bien que non illustré dans les figures 2 à 7, les dispositifs d'amplification des vibrations peuvent également présenter un organe de conversion de l'énergie mécanique de la masse mobile en énergie électrique. On peut pour cela utiliser une conversion électrostatique, électromagnétiques ou piézo-électriques en exploitant le mouvement relatif entre la masse mobile et le support (comme détaillé dans la demande de brevet FR2896635 A1). Des exemples de convertisseurs seront détaillés par la suite.

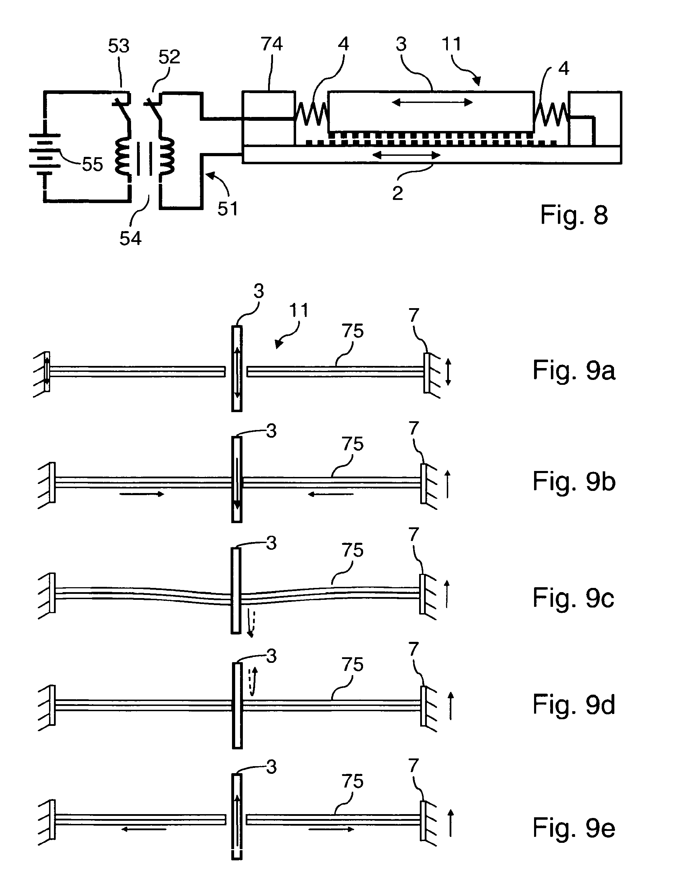

La figure 8 illustre un autre mode de réalisation d'un dispositif d'amplification 11. Le support 2 présente une composante de vibration selon une direction horizontale. Des plots 74 sont fixés sur le support 2 de part et d'autre d'une masse mobile 3. La masse mobile 3 est mobile en translation par rapport au support 2. La masse mobile 3 est raccordée aux plots 74 respectivement par l'intermédiaire des ressorts 4. Le support 2, les ressorts 4 et la masse mobile 3 sont conducteurs ou présentent des connexions pour former un circuit électrique. Le circuit électrique formé comprend en série un ressort 4, la partie conductrice de la masse mobile 3, un autre ressort 4 et la partie conductrice du support 2. Un circuit de commande 51 est connecté aux bornes de ce circuit électrique. Le circuit de commande 51, comprend des interrupteurs 52 et 53, un transformateur 54 et une batterie 55.

La masse mobile 3 et le support 2 présentent des surfaces conductrices rainurées disposées en vis-à-vis. Ces surfaces présentent une alternance d'encoches et de renflements selon la direction de déplacement de la masse mobile 3. Ces surfaces rainurées ont un même pas. Un condensateur est formé entre la masse mobile 3 et le support 2, sa capacité étant variable en fonction de la position relative entre la masse et le support.

Lorsque l'on souhaite accoupler la masse mobile 3 au support 2, on charge les surfaces rainurées avec une charge électrique fournie par la batterie 55 en fermant transitoirement et successivement les interrupteurs 53 puis 52. On réalise la fermeture des interrupteurs 52 et 53 lorsque l'on détecte une vitesse maximale du support 2 et lorsque les encoches des surfaces rainurées sont en vis-à-vis. Les interrupteurs 52 et 53 sont à nouveau transitoirement fermés, mais dans un ordre inverse (52 puis 53) lorsque la tension aux bornes du condensateur formé atteint un minimum ou repasse en dessous d'une première limite ou encore passe au-delà d'une seconde limite, afin de retirer la charge électrique du condensateur. Dans le cas d'une décharge à tension minimum Vmin, la capacité à l'instant de cette décharge a une valeur maximale Cmax. Ce cas correspond à un accouplement effectif, la masse mobile 3 effectivement est repartie dans l'autre sens en repassant par le maximum de capacité (la force électrostatique induite par l'introduction de la charge électrique dans le condensateur a été suffisante pour bloquer et faire changer de sens la masse mobile 3). Il est possible aussi de faire un accouplement incomplet en retirant la charge électrique légèrement avant que la capacité électrique repasse par sa valeur maximale, c'est-à-dire en déclenchant le retrait de la charge dès que la tension repasse en dessous d'un seuil au lieu d'attendre qu'elle passe par un minimum. Ce fonctionnement permet d'extraire une petite quantité d'énergie électrique à chaque accouplement (retrait de la charge électrique à une valeur de capacité inférieure à celle de l'injection or l'énergie $E=1/2Q^2/C$ associée à cette charge augmente avec la décroissance de la capacité).

Avant d'obtenir un accouplement entre la masse mobile 3 et le support 2, la masse mobile 3 poursuit sa course avec une orientation inverse de celle du support 2 sous l'effet de son énergie cinétique. Lorsqu'une encoche de la masse mobile 3 parcourt la moitié d'un pas des surfaces rainurées, cela signifie que la charge stockée dans le condensateur est insuffisante pour réaliser l'accouplement. Dans cette position intermédiaire, la capacité a une valeur minimale Cmin alors que la tension aux bornes du circuit électrique a une valeur maximale Vmax. On ferme alors transitoirement l'interrupteur 52 pour décharger l'énergie stockée dans le condensateur vers le circuit magnétique du transformateur 54 via un bobinage primaire. L'interrupteur 53 est alors transitoirement fermé afin de transférer l'énergie stockée dans le circuit magnétique vers la batterie par l'intermédiaire d'un bobinage secondaire du transformateur 54. Comme l'introduction de la charge électrique dans le condensateur s'est fait à capacité maximale, c'est-à-dire avec une énergie égale à $\frac{1}{2}Q^2/Cmax$ et comme le retrait de cette charge s'est fait à capacité minimale, c'est à dire restituant une énergie égale à $\frac{1}{2}Q^2/Cmin$, un excédant d'énergie de $\frac{1}{2}Q^2(1/Cmin-1/Cmax)$ a été produit.

La masse mobile 3 perd alors un peu de son énergie cinétique. Par conséquent, lorsque les encoches des surfaces rainurées sont à nouveau en vis-à-vis, on referme transitoirement les interrupteurs 53 puis 52 afin de réaliser l'accouplement de la masse 3 et du support 2.

Lorsque la masse mobile 3 et le support 2 sont accouplés et se déplacent donc selon la même orientation, l'interrupteur 52 est à nouveau transitoirement fermé pour vider la charge contenue dans la capacité, puis l'interrupteur 52 est maintenu ouvert afin de maintenir la masse mobile 3 désaccouplée du support 2. L'interrupteur 53 est ensuite transitoirement fermé pour transférer la charge provenant de la capacité, qui a transitoirement été stockée dans le circuit magnétique du transformateur 54 lors de la fermeture de 52, dans la batterie 55.

Le circuit de commande 51 permet ainsi à la fois de réaliser l'accouplement/désaccouplement et la récupération d'énergie générée par le mouvement de la masse mobile 3.

En utilisant des surfaces rainurées dont le pas est suffisamment réduit, on peut réaliser l'accouplement entre la masse mobile 3 et le support 2 sur l'ensemble de la course de la masse mobile 3.

La figure 9a représente schématiquement un autre mode de réalisation d'un dispositif d'amplification 11. Une masse mobile 3 est montée coulissante par rapport à un cadre 7 selon une direction de déplacement. Des bilames piézo-électriques 75 disposés en vis-à-vis sont encastrés par une extrémité dans le cadre 7 et s'étendent sensiblement selon une direction perpendiculaire au déplacement de la masse 3. Les bilames 75 sont commandés de sorte qu'en leur appliquant une tension électrique appropriée, ils s'allongent en direction de la masse 3 jusqu'à l'enserrer par leur extrémité libre et garantir l'accouplement entre le cadre 7 et la masse 3. Du fait de leur configuration allongée et de leur disposition perpendiculaire au mouvement de la masse 3, les bilames 75 subissent une flexion lors d'un accouplement si un mouvement relatif existe entre le cadre 7 et la masse mobile 3.

Les figures 9b à 9e illustrent le fonctionnement du dispositif 11 durant différentes phases. Sur la figure 9b, la masse mobile se déplace vers le bas alors que le cadre 7 se déplace vers le haut. Durant ces déplacements opposés, un allongement des bilames 75 est commandé. Les bilames 75 viennent alors réaliser l'accouplement entre le cadre 7 et la masse mobile 3. Le mouvement de la masse 3 vers le bas se poursuit transitoirement en induisant un fléchissement des bilames 75. La masse 3 finit par avoir une vitesse relative nulle par rapport au cadre 7 lorsque la flexion des bilames 75 est maximale (figure 9c). Sur la figure 9d, la masse 3 se déplace selon la même orientation que le cadre 7, sous l'effet de l'entraînement par le cadre 7 et du rappel par l'effet ressort des bilames 75. Sur la figure 9e, les bilames 75 sont commandés pour désaccoupler la masse 3.

L'utilisation de bilames piézo-électriques 75 s'avère avantageuse puisqu'elle permet d'exercer d'importants efforts d'accouplement sur la masse 3. Par ailleurs, les bilames piézo-électriques permettent avec un dimensionnement approprié de former un ressort fournissant un facteur de qualité élevé du fait du faible amortissement structurel des matériaux piézoélectriques. De plus, en utilisant un système de commande approprié, l'énergie stockée dans les bilames 75 par accroissement de leur tension différentielle durant leur flexion (conversion de la déformation mécanique en tension électrique dans le matériau piézoélectrique) peut être récupérée, afin de convertir l'énergie cinétique de la masse 3 en énergie électrique. Les matériaux piézo-électriques étant aptes à générer des charges électriques suite à leur traction ou compression. Leur rendement de conversion mécanique/électrique est d'autant plus élevé que la déformation qui leur est appliquée est rapide.

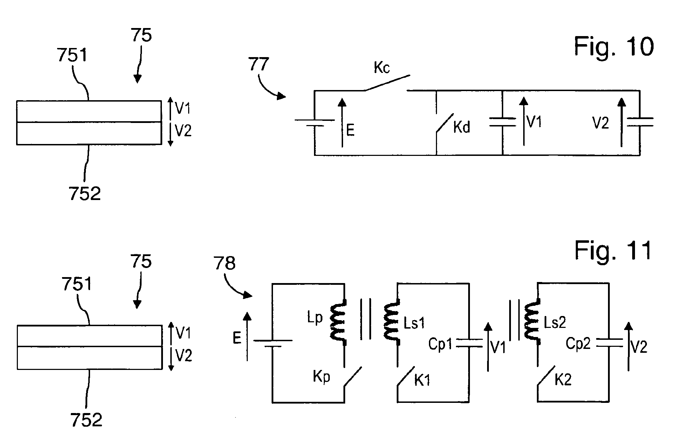

La figure 10 représente schématiquement un bilame piézoélectrique et un premier mode de réalisation d'un circuit destiné à le commander. Le circuit 77 comprend une source de tension E, des interrupteurs Kc et Kd et des bornes d'application des potentiels V1 et V2 sur les lames 751 et 752 respectivement. L'allongement du bilame 75 est obtenu en fermant l'interrupteur Kc et en ouvrant l'interrupteur Kd. La rétractation du bilame est obtenue en ouvrant l'interrupteur Kc et en fermant l'interrupteur Kd.

La figure 11 représente schématiquement un bilame piézoélectrique 75 selon un deuxième mode de réalisation d'un circuit destiné à le commander. Le circuit 78 permet en outre de transférer de l'énergie électrique stockée dans le bilame 75 vers une source de tension E.

Les fermetures transitoires de Kp, puis de K1 et K2 permettent de transférer une énergie de la source E vers les lames 751 et 752. Les fermetures transitoires de K1 et K2, puis de Kp permettent de transférer une énergie des lames vers la source E.

Pour assurer l'accouplement, une énergie est transférée de la source E vers les lames. La flexion du bilame 75 illustré à la figure 9c, qui fait suite à l'accouplement, engendre un allongement de la lame 751 et une contraction de la seconde lame 752, ce qui a tendance à faire augmenter le potentiel V1 et diminuer le potentiel V2. Lorsque la flexion est maximale, une partie de la charge électrique stockée dans la lame piézoélectrique 751 (dont la tension a augmenté lors de son allongement) est transférée vers la source E par les fermetures transitoires de K1 puis Kp. Dans le même temps une charge électrique est transférée de la source E vers la deuxième lame 752 dont la tension à chuté lors de sa contraction. Comme la charge électrique collectée sur la lame 751 est à un potentiel supérieur à la charge électrique transférée à la lame 752, si les charges collectées et transférées sont les mêmes, alors la source E collecte plus d'énergie qu'elle n'en fournit et donc voit son énergie augmentée (Gain=1/2Q$\Delta$V). En fait, du fait des déformations opposée des deux lames 751 et 752, on a création d'une tension différentielle entre ces lames et en ramenant cette différence de potentielle à zéro, on récupère ce l'on appellera l'énergie de tension différentielle.

Enfin, quant le bilame 75 revient en position non fléchie (figure 9d à 9e), l'énergie présente sur chacune des deux lames 751 et 752 est transférée vers la source E, via les fermetures transitoires de K1 puis Kp et de K2 puis Kp. On restitue alors à la source E l'énergie initialement consommée pour produire l'allongement du bilame 75, complétée de l'énergie différentielle à nouveau crée lors du retour du bilame 75 en position non fléchie. A noter que les temps de transferts d'énergie à partir ou vers le circuit magnétique et donc les temps de fermeture des interrupteurs K1, K2 et Kp sont très courts (quelques $\mu$s) au regard des mouvements mécaniques (quelques ms) ou des durées d'accouplement (quelques centaines de $\mu$s).

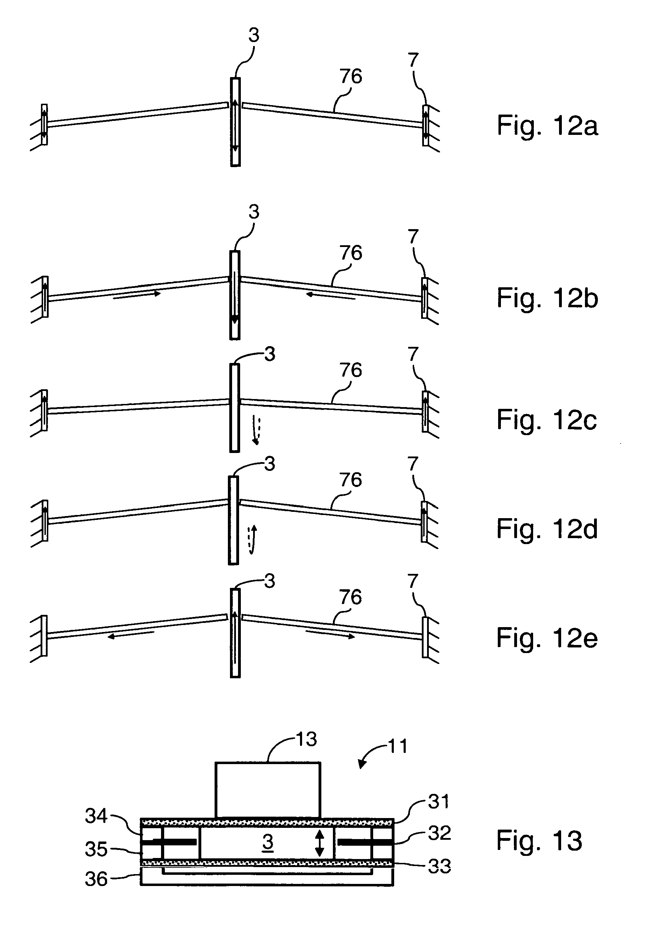

La figure 12a représente schématiquement un autre mode de réalisation d'un dispositif d'amplification 11. Des lames piézo-électriques 76 disposées en vis-à-vis sont encastrées par une extrémité dans le cadre 7 et s'étendent selon une direction légèrement inclinée par rapport à la perpendiculaire au déplacement de la masse 3. Les lames 76 sont commandées de sorte qu'en leur appliquant une tension électrique appropriée, elles s'allongent en direction de la masse 3 jusqu'à l'enserrer par leur extrémité libre et garantir l'accouplement entre le cadre 7 et la masse 3.

Ces lames 76 sont destinées à réaliser l'accouplement de la masse 3 au moment où celle-ci descend. D'autres lames non illustrées présentent une orientation opposée afin de réaliser l'accouplement de la masse 3 lorsque celle-ci remonte.

Les figures 12b à 12e illustrent le fonctionnement du dispositif 11 durant différentes phases. Sur la figure 12b, la masse mobile 3 se déplace vers le bas alors que le cadre 7 se déplace vers le haut. Durant ces déplacements opposés, un allongement des lames 76 est commandé. Les lames 76 viennent alors réaliser l'accouplement entre le cadre 7 et la masse mobile 3. Sur la figure 12c, le mouvement de la masse 3 vers le bas se poursuit transitoirement en induisant une compression des lames 76 du fait de leur légère inclinaison par rapport à la direction de déplacement de la masse 3. La masse 3 finit par avoir une vitesse nulle par rapport au cadre 7. Du fait de la compression, les lames 76 génèrent un effet ressort de rappel. Sur la figure 12d, la masse 3 se déplace selon la même orientation que le cadre 7, sous l'effet de l'entraînement par le cadre 7 et du rappel par l'effet ressort des lames 76. Sur la figure 12e, les lames 76 sont commandées pour désaccoupler la masse 3 avant que l'orientation de déplacement du support 7 ne change.

En utilisant une commande appropriée des lames 76, on peut récupérer de l'énergie électrique stockée lors de la compression de celles-ci durant l'accouplement

La figure 13 représente un autre mode de réalisation d'un dispositif d'amplification de vibration 11. Ce dispositif 11 s'avère particulièrement approprié pour une réalisation utilisant des techniques de gravure et d'usinage de substrats de silicium. Une masse mobile 3 est solidarisée par deux de ses faces à des films flexibles 31 et 33. Ces films 31 et 33 forment des ressorts de rappel de la masse 3 et guident également la masse 3 en translation selon une direction perpendiculaire à leur plan. Les films flexibles peuvent par exemple être réalisés en polyimide. Les films flexibles 31 et 33 sont espacés l'un de l'autre par l'intermédiaire de couches de silicium 34 et 35 gravées dans leur partie médiane afin de loger la masse 3. Les couches 34 et 35 sont solidaires respectivement des films 31 et 33. Une embase 36 réalisée en silicium est solidaire d'un support vibrant et fixée sous le film 33. Un lamage est gravé dans la partie médiane de l'embase 36 afin de permettre un débattement de la masse mobile 3. Une masse rapportée 13 est fixée sur la partie supérieure du film 31. Cette masse 13 peut être réalisée en métal (tungstène par exemple) afin d'accroître la masse en mouvement du système résonnant. Le dispositif 11 comprend un empilement de couches 32 interposées entre les couches de silicium 34 et 35. L'empilement de couches 32 est mis en forme de façon appropriée pour former des bilames piézo-électriques de part et d'autre de la masse 3. Par une commande appropriée, ces bilames s'allongent jusqu'à accoupler la masse 3 à l'embase 36. Les bilames pourront également être utilisés pour la conversion de l'énergie cinétique de la masse 3 en énergie électrique.

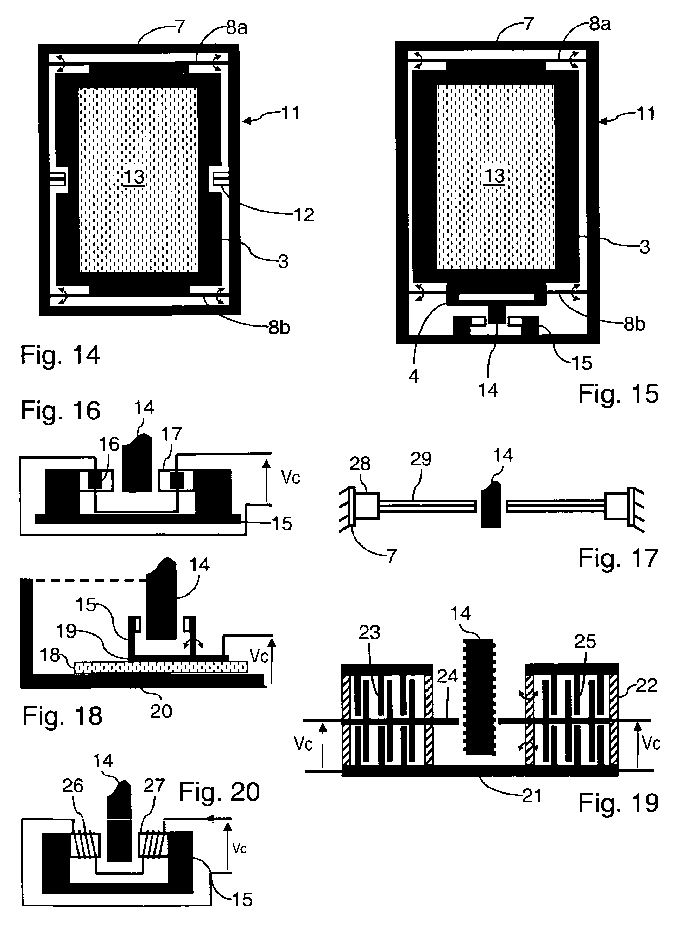

Dans l'exemple de la figure 14, la masse 3, le cadre 7, des ressorts secondaires 8a et 8b sont formés monobloc. L'élément monobloc pourra par exemple être moulé ou être réalisé par gravure d'une couche de silicium. Dans cet exemple, les ressorts secondaires 8a et 8b sont formés de poutres flexibles encastrées d'une part sur la masse 3 et d'autre part sur le cadre 7. Ces poutres s'étendent perpendiculairement au déplacement de la masse3. La masse 3 comprend un élément rapporté 13 destiné à accroître la masse du système résonnant. Cette masse rapportée 13 pourra être collée sur la partie en silicium de la masse 3. Deux bilames piézo-électriques 12 sont encastrés par une extrémité dans le cadre 7 et s'étendent perpendiculairement à la direction de déplacement de la masse 3. Les bilames 12 sont disposés de part et d'autre de la masse 3, afin que les efforts qu'il applique sur la masse 3 se compensent. Leur autre extrémité est destinée à venir sélectivement en contact avec la masse 3 pour l'accoupler avec le cadre 7. Comme dans les exemples précédents, l'accouplement entre le cadre 7 et la masse 3 interviendra lorsque leurs orientations de déplacement seront opposées. Le désaccouplement interviendra lorsque les orientations de déplacement du cadre et de la masse 3 sont identiques, de préférence lorsque le cadre 7 atteint sa vitesse maximale. L'accouplement et le désaccouplement seront commandés électroniquement. L'accouplement pourra être réalisé en appliquant une tension aux bilames 12 induisant leur allongement jusqu'à venir en contact avec la masse 3. Durant l'accouplement entre le support 7 et la masse 3, les bilames piézo-électriques 12 pourront faire office de ressorts en fléchissant sous l'effet de l'énergie cinétique de la masse 3. Durant la flexion de tels bilames 12, les composants piézoélectriques stockent de l'énergie électrique. En connectant sélectivement les bilames 12 à un circuit approprié, on pourra ainsi convertir l'énergie cinétique de la masse 3 en énergie électrique.

La figure 15 illustre une autre variante de dispositif d'amplification 11. Dans cet exemple, la masse 3, le cadre 7, un ressort de rappel 4 et des ressorts secondaires 8a et 8b sont formés monobloc. L'élément monobloc sera avantageusement réalisé par gravure d'une couche de silicium. Dans cet exemple, les ressorts secondaires 8a et 8b sont formés de poutres flexibles encastrées d'une part sur la masse 3 et d'autre part sur le cadre 7. Ces poutres s'étendent perpendiculairement au déplacement de la masse 3. Le ressort de rappel 4 est réalisé sous forme d'une poutre encastrée à ses deux extrémités sur le support 3, s'étendant perpendiculairement au déplacement de la masse 3. La raideur du ressort 4 est très supérieure à la raideur des ressorts secondaires 8a et 8b. La masse 3 comprend un élément rapporté 13 destiné à accroître la masse du système résonnant. Une saillie 14 est encastrée dans la partie médiane de la poutre du ressort 4 et s'étend selon la direction de déplacement de la masse 3. Un organe d'accouplement comprend des mâchoires 15 solidaires du cadre 7. Les mâchoires 15 sont destinées à accoupler sélectivement la saillie 14 au cadre 7. Comme dans les exemples précédents, l'accouplement entre le cadre 7 et la masse 3 interviendra lorsque leurs orientations de déplacement seront opposées. Le désaccouplement interviendra lors d'un changement d'orientation de la masse 3 lorsque les orientations de déplacement de la masse 3 et du cadre 7 et sont identiques. L'accouplement et le désaccouplement seront commandés électroniquement.

Les figures 15 à 20 représentent différents modes de réalisation d'organes d'accouplement entre la masse 3 et un cadre ou un support. Dans ces exemples, les organes d'accouplement enserrent une saillie 14 solidaire de la masse 3 mais l'accouplement peut bien entendu être réalisé sur un autre élément solidaire de la masse 3.

La figure 16 représente des mâchoires 15 munies d'éléments de serrage 17 présentant un fort coefficient de dilatation thermique. Des résistances chauffantes 16 sont noyées à l'intérieur des éléments de serrage 17. Lorsque l'on souhaite accoupler le cadre 7 à la saillie 24, on applique une tension de commande aux bornes des résistances chauffantes 16. Dès lors, les éléments de serrage 17 se dilatent jusqu'à venir enserrer et immobiliser la saillie 14. On peut également envisager d'utiliser des éléments de serrage réalisés en matériaux à mémoire de forme. De telles mâchoires 15 sont relativement aisées à fabriquer sur un support en silicium. L'actionnement des mâchoires nécessite une énergie relativement faible et une tension d'alimentation relativement faible pour générer une dilatation permettant d'enserrer la saillie 14.

De telles mâchoires 15 ne permettent cependant pas de réaliser une conversion d'énergie cinétique en énergie électrique. La variante de la figure 17 combine ainsi des éléments à fort coefficient de dilatation thermique 28 avec des bilames piézo-électriques 29. Les éléments 28 sont encastrés dans le cadre 7 et leur dilatation est commandée par des résistances électriques. Les bilames 29 sont encastrés par une extrémité dans les éléments 28. Lors de la dilatation des éléments 28, l'extrémité libre des bilames 29 vient en contact avec la saillie 14 pour générer l'accouplement. Selon le principe détaillé précédemment, de l'énergie électrique stockée durant une déformation des bilames 29 par l'énergie cinétique de la masse 3 durant un accouplement pourra être récupérée par un circuit électrique.

La figure 18 représente une autre variante d'organe d'accouplement. Dans cette variante, un élément conducteur 20 est solidaire du cadre. Les mâchoires 15 sont réalisées dans une embase conductrice 19. Les mâchoires sont placées de part et d'autre de la saillie 14. La saillie 14 est elle-même conductrice et est connectée à l'élément 20. L'embase 19 est séparée de l'élément conducteur 20 par l'intermédiaire d'une couche isolante 18. Lorsqu'une différence de tension est appliquée entre l'embase 19 et l'élément 20, les mâchoires 15 fléchissent et viennent se plaquer sur la saillie 14 du fait de forces électrostatiques.

La figure 19 représente une autre variante d'organe d'accouplement. Dans cette variante, l'organe d'accouplement comprend un élément 21 conducteur. Cet élément 21 est solidaire d'un support vibrant. Cet élément 21 est solidaire et connecté à des plaques conductrices 25. Des plaques conductrices 23 sont placées en vis-à-vis des plaques conductrices 25. Ces plaques 23 sont traversées dans leur partie médiane par des tiges de blocage 24. Les tiges 24 sont montées mobiles en translation par rapport à l'élément 21 par l'intermédiaire de parois flexibles et isolantes 22. La flexion des parois 22 permet un déplacement en translation perpendiculaire à la direction de déplacement de la saillie 14. Lors de l'application d'une différence de tension entre les plaques 23 et les plaques 25, une force électrostatique déplace les plaques 23 par rapport aux plaques 25. Les tiges 24 se déplacent alors jusqu'à venir en prise dans des encoches délimitées par des renflements et ménagées dans la saillie 14. Dès lors, les tiges 24 sont accouplées à la saillie 14.

Avantageusement, les encoches ménagées de part et d'autre de la saillie 14 sont décalées selon la direction de déplacement de cette saillie 14 : ainsi, la résolution des encoches sera augmentée puisqu'une tige 14 pourra s'insérer dans une encoche si la tige 14 opposée vient en butée contre un renflement. Il est possible aussi de multiplier le nombre d'organes d'accouplement le long de la saillie 14 ou sur d'autres saillies. En décalant alors chaque organe différemment par rapport aux encoches on augmente alors la probabilité qu'au moins une des tiges 14 des organes rencontre une encoche au moment de la commande de l'accouplement. L'extrémité des tiges 14 pourra aussi être amincie pour faciliter leur entrée dans les encoches.

Bien que l'on ait illustré des parois 22 isolantes, celles-ci peuvent également être conductrices en déportant l'isolation électrique. Les parois 22 et les plaques 25 être fixées sur un support isolant. Les paroi 22 et les plaques 25 seront alors isolées électriquement par l'intermédiaire de ce support.

La figure 20 représente encore une variante d'organe d'accouplement. Dans cette variante, les mâchoires 15 sont munies d'éléments de serrage 27 réalisés en matériaux magnétostrictifs. Les éléments de serrage 27 sont entourés par des bobines 26. Lorsqu'une différence de tension est appliquée entre les bornes des bobines 26, les éléments de serrage 27 se dilatent et viennent enserrer la saillie 14 pour l'immobiliser.

Pour chacun des dispositifs d'accouplement, il est avantageux d'avoir un faible espacement (par exemple quelques $\mu$m) entre le/les actionneurs et la partie mobile, afin de limiter la course de l'actionneur et donc l'énergie nécessaire pour produire l'accouplement.

Par ailleurs, lorsque le support ou son interface de fixation au dispositif d'amplification est munie d'un accéléromètre, celui-ci mesurera avantageusement l'amplitude de l'accélération subie. En effet, si l'énergie vibratoire du support est insuffisante pour transférer suffisamment d'énergie dans la masse mobile, le fonctionnement de l'organe d'accouplement sera désactivé afin que le dispositif ne consomme pas plus d'énergie électrique qu'il n'en produit.

Bien que les modes de réalisation décrits se basent sur des mouvements de translation de la masse mobile, on peut également appliquer l'invention à des dispositifs d'amplification mécaniques basés sur des mouvements rotatifs ou composés de la masse mobile.

**Revendications**

1. Dispositif micromécanique (11) d'amplification d'un mouvement vibratoire, comprenant :

   - une interface de solidarisation (7) du dispositif à un organe vibrant;
   - une masse (3) montée mobile selon au moins un degré de liberté par rapport à l'interface ;
   - un ressort (4) apte à exercer une sollicitation de rappel entre la masse mobile et l'interface;
   - un organe de détection de l'orientation de déplacement de l'interface selon ledit degré de liberté ; **caractérisé en ce qu'**il comprend en outre :
   - un organe (6) d'accouplement de la masse mobile à l'interface, configurée pour accoupler la masse mobile (3) à l'interface (7) lorsque l'orientation de déplacement de l'interface est opposée à celle de la masse mobile et configurée pour désaccoupler la masse mobile de l'interface avant un changement d'orientation de l'interface et lorsque l'orientation de déplacement de l'interface est identique à celle de la masse mobile.

2. Dispositif (11) selon la revendication 1, comprenant un organe de détection d'une vitesse maximale de l'interface (7), et dans lequel l'organe d'accouplement (6) est configuré pour accoupler la masse mobile (3) à l'interface (7) lorsque l'interface (7) atteint sa vitesse maximale.

**3.** Dispositif (11) selon la revendication 2, dans lequel l'organe de détection de l'orientation de déplacement et/ou l'organe de détection de la vitesse maximale comprennent un accéléromètre, dans lequel l'organe d'accouplement comprend un actionneur à commande électrique, le dispositif comprenant en outre un dispositif de traitement commandant l'actionneur en fonction de mesures fournies par l'accéléromètre.

**4.** Dispositif (11) selon la revendication 3, dans lequel la vitesse maximale est détectée en fonction de la croissance ou de la décroissance de l'accélération lors de son passage par une valeur nulle.

**5.** Dispositif (11) selon la revendication 1 ou 2, dans lequel la masse (3) est mobile en translation par rapport à l'interface (7), dans lequel l'organe d'accouplement comprend une masselotte (61) montée pivotante par rapport à un axe perpendiculaire à l'axe de translation de la masse (3) avec un balourd, la masselotte (61) étant montée pivotante entre deux positions dans lesquelles la masse (3) est accouplée à l'interface (7) pour des orientations respectives du déplacement de la masse (3) par rapport à l'interface (7).

**6.** Dispositif selon l'une quelconque des revendications 1 à 3, dans lequel l'interface (7) et la masse mobile (3) présentent des surfaces conductrices rainurées en vis-à-vis pour former une capacité, le dispositif comprenant un circuit de commande (51) appliquant sélectivement une tension entre les surfaces rainurées pour accoupler ou désaccoupler l'interface et la masse mobile.

**7.** Dispositif selon la revendication 6, dans lequel le circuit de commande (51) est configuré pour décharger et stocker sélectivement la charge incluse dans la capacité formée.

**8.** Dispositif selon l'une quelconque des revendications 1 à 3, dans lequel la masse (3) est mobile en translation par rapport à l'interface (7), dans lequel l'organe d'accouplement comprend un élément piézoélectrique (75) commandé pour s'allonger selon une direction perpendiculaire à la direction de déplacement de la masse (3) de façon à accoupler la masse (3) à l'interface (7).

**9.** Dispositif selon la revendication 8, dans lequel l'élément piézoélectrique (75) s'étend selon une direction perpendiculaire à la direction de déplacement de la masse (3) et est flexible de façon à former ledit ressort (4) durant l'accouplement.

**10.** Dispositif (11) selon l'une quelconque des revendications précédentes, dans lequel l'interface (7), la masse (3) et le ressort (4) comprennent un élément commun formé monobloc dans un substrat de silicium.

**11.** Dispositif selon la revendication 10, dans lequel la masse (3) comprend un élément rapporté (13) fixé sur l'élément monobloc.

**12.** Dispositif selon la revendication 10 ou 11, dans lequel le ressort (4) est formé par une poutre flexible ménagée dans l'élément monobloc.

**13.** Dispositif selon l'une quelconque des revendications précédentes, dans lequel la masse (3) présente une partie d'accouplement (14) munie d'une alternance d'encoches et de renflements, dans lequel l'organe d'accouplement comprend un actionneur (24) s'insérant dans une encoche de la partie d'accouplement durant un accouplement.

**14.** Dispositif selon l'une quelconque des revendications précédentes, comprenant un organe de conversion de l'énergie mécanique de la masse mobile en énergie électrique.

**15.** Système comprenant un dispositif micromécanique d'amplification selon l'une quelconque des revendications précédentes et un support vibrant (2) solidaire de l'interface du dispositif micromécanique, l'organe vibrant présentant une masse au moins 50 fois supérieure à celle du dispositif micromécanique.

**16.** Procédé d'amplification du mouvement d'un organe vibrant (2) par un dispositif micromécanique, comprenant les étapes consistant à :

- fournir un dispositif micromécanique (11) muni d'une masse mobile (3) selon au moins un degré de liberté par rapport à l'organe vibrant et muni d'un ressort (4) apte à exercer une sollicitation de rappel entre la masse mobile et l'organe vibrant ;
- détecter l'orientation de déplacement de l'organe vibrant selon ledit degré de liberté ;

- accoupler la masse mobile à l'organe vibrant lorsque l'orientation de déplacement de l'organe vibrant est opposée à celle de la masse mobile et désaccoupler la masse mobile de l'organe vibrant avant un changement d'orientation de l'organe vibrant et lorsque l'orientation de déplacement de l'organe vibrant est identique à celle de la masse mobile.

**Claims**

1.  Micromechanical device (11) for amplifying a vibratory movement, comprising:

    - an interface (7) for attaching the device to a vibrating member;
    - a weight (3) mounted to move according to at least one degree of freedom relative to the interface;
    - a spring (4) capable of exerting a return stress between the moving weight and the interface;
    - a member for detecting the orientation of displacement of the interface according to said degree of freedom;
    **characterized in that** it also comprises:

    - a member (6) for coupling the moving weight to the interface, configured to couple the moving weight (3) to the interface (7) when the orientation of displacement of the interface is opposite to that of the moving weight and configured to uncouple the moving weight from the interface before a change of orientation of the interface and when the orientation of displacement of the interface is identical to that of the moving weight.

2.  Device (11) according to Claim 1, comprising a member for detecting a maximum speed of the interface (7), and in which the coupling member (6) is configured to couple the moving weight (3) to the interface (7) when the interface (7) reaches its maximum speed.

3.  Device (11) according to Claim 2, in which the member for detecting the orientation of displacement and/or the member for detecting the maximum speed comprise an accelerometer, in which the coupling member comprises an electrically-controlled actuator, the device also comprising a processing device controlling the actuator according to measurements supplied by the accelerometer.

4.  Device (11) according to Claim 3, in which the maximum speed is detected according to the increase or decrease in the acceleration upon its passage through a zero value.

5.  Device (11) according to Claim 1 or 2, in which the weight (3) is able to move in translation relative to the interface (7), in which the coupling member comprises a feeder head (61) mounted to pivot relative to an axis at right angles to the axis of translation of the weight (3) with an unbalance, the feeder head (61) being mounted to pivot between two positions in which the weight (3) is coupled to the interface (7) for respective orientations of the displacement of the weight (3) relative to the interface (7).

6.  Device according to any one of Claims 1 to 3, in which the interface (7) and the moving weight (3) have grooved conductive surfaces facing one another to form a capacitance, the device comprising a control circuit (51) selectively applying a voltage between the grooved surfaces to couple or uncouple the interface and the moving weight.

7.  Device according to Claim 6, in which the control circuit (51) is configured to selectively discharge and store the charge included in the capacitance formed.

8.  Device according to any one of Claims 1 to 3, in which the weight (3) can move in translation relative to the interface (7), in which the coupling member comprises a piezoelectric element (75) controlled to be elongated in a direction at right angles to the direction of displacement of the weight (3) so as to couple the weight (3) to the interface (7).

9.  Device according to Claim 8, in which the piezoelectric element (75) extends in a direction at right angles to the direction of displacement of the weight (3) and is flexible so as to form said spring (4) during the coupling.

10. Device (11) according to any one of the preceding claims, in which the interface (7), the weight (3) and the spring (4) comprise a common element formed as a single piece in a silicon substrate.

11. Device according to Claim 10, in which the weight (3) comprises an added-on element (13) fastened to the single-piece element.

12. Device according to Claim 10 or 11, in which the spring (4) is formed by a flexible beam formed in the single-piece element.

13. Device according to any one of the preceding claims, in which the weight (3) has a coupling part (14) provided with an alternation of notches and bulges, in which the coupling member comprises an actuator (24) that is inserted in a notch of the coupling part during a coupling.

14. Device according to any one of the preceding claims, comprising a member for converting the mechanical energy of the moving weight into electrical energy.

15. System comprising a micromechanical amplification device according to any one of the preceding claims and a vibrating support (2) attached to the interface of the micromechanical device, the vibrating member having a weight at least 50 times greater than that of the micromechanical device.

16. Method for amplifying the movement of a vibrating member (2) by a micromechanical device, comprising the steps consisting in:

- supplying a micromechanical device (11) provided with a weight (3) that can move according to at least one degree of freedom relative to the vibrating member and provided with a spring (4) capable of exerting a return stress between the moving weight and the vibrating member;
- detecting the orientation of displacement of the vibrating member according to said degree of freedom;
- coupling the moving weight to the vibrating member when the orientation of displacement of the vibrating member is opposite to that of the moving weight and uncoupling the moving weight from the vibrating member before a change of orientation of the vibrating member and when the orientation of displacement of the vibrating member is identical to that of the moving weight.


**Patentansprüche**

1. Mikromechanische Vorrichtung (11) zur Verstärkung einer Vibrationsbewegung, umfassend:

- eine Schnittstelle (7) zur Verbindung der Vorrichtung mit einem Vibrationselement;
- eine Masse (3), die entlang mindestens eines Freiheitsgrades in Bezug zur Schnittstelle beweglich montiert ist;
- eine Feder (4), die geeignet ist, eine Rückstellbelastung zwischen der beweglichen Masse und der Schnittstelle auszuüben;
- ein Element zur Erfassung der Verschieberichtung der Schnittstelle entlang des Freiheitsgrades;
**dadurch gekennzeichnet, dass** sie ferner Folgendes umfasst:

- ein Element (6) zur Kopplung der beweglichen Masse mit der Schnittstelle, das derart ausgeführt ist, dass es die bewegliche Masse (3) mit der Schnittstelle (7) koppelt, wenn die Verschieberichtung der Schnittstelle zu jener der beweglichen Masse entgegengesetzt ist, und das derart ausgeführt ist, dass es die bewegliche Masse vor einer Richtungsänderung der Schnittstelle und wenn die Verschieberichtung der Schnittstelle mit jener der beweglichen Masse identisch ist, von der Schnittstelle entkoppelt.

2. Vorrichtung (11) nach Anspruch 1, umfassend ein Element zur Erfassung einer Höchstgeschwindigkeit der Schnittstelle (7), wobei das Kopplungselement (6) derart ausgeführt ist, dass es die bewegliche Masse (3) mit der Schnittstelle (7) koppelt, wenn die Schnittstelle (7) ihre Höchstgeschwindigkeit erreicht.

3. Vorrichtung (11) nach Anspruch 2, bei der das Element zur Erfassung der Verschieberichtung und/oder das Element zur Erfassung der Höchstgeschwindigkeit einen Beschleunigungsmesser umfassen, wobei das Kopplungselement ein Betätigungselement mit elektrischer Steuerung umfasst, wobei die Vorrichtung ferner eine Bearbeitungsvorrichtung umfasst, die das Betätigungselement in Abhängigkeit von vom Beschleunigungsmesser gelieferten Messungen steuert.

4. Vorrichtung (11) nach Anspruch 3, bei der die Höchstgeschwindigkeit in Abhängigkeit von der Zunahme oder Abnahme der Beschleunigung bei ihrem Verlauf über einen Nullwert erfasst wird.

5. Vorrichtung (11) nach Anspruch 1 oder 2, bei der die Masse (3) in Translation in Bezug zur Schnittstelle (7) beweglich ist, wobei das Kopplungselement ein Fliehgewicht (61) umfasst, das schwenkbar in Bezug zu einer Achse senkrecht auf die Translationsachse der Masse (3) mit einer Unwucht montiert ist, wobei das Fliehgewicht (61) schwenkbar zwischen zwei Positionen montiert ist, in denen die Masse (3) mit der Schnittstelle (7) für jeweilige Verschieberichtungen der Masse (3) in Bezug zur Schnittstelle (7) gekoppelt ist.

6. Vorrichtung nach einem der Ansprüche 1 bis 3, bei der die Schnittstelle (7) und die bewegliche Masse (3) gegenüberliegende gerillte leitende Flächen aufweisen, um eine Kapazität zu bilden, wobei die Vorrichtung eine Steuerschaltung (51) umfasst, die selektiv eine Spannung zwischen den gerillten Flächen anlegt, um die Schnittstelle und die bewegliche Masse zu koppeln oder entkoppeln.

7. Vorrichtung nach Anspruch 6, bei der die Steuerschaltung (51) derart ausgeführt ist, dass sie selektiv die in der gebildeten Kapazität eingeschlossene Ladung entlädt und speichert.

8. Vorrichtung nach einem der Ansprüche 1 bis 3, bei der die Masse (3) in Translation in Bezug zur Schnittstelle (7) beweglich ist, wobei das Kopplungselement ein piezoelektrisches Element (75) umfasst, das derart gesteuert ist, dass es sich in eine Richtung senkrecht auf die Verschieberichtung der Masse (3) verlängert, um die Masse (3) mit der Schnittstelle (7) zu koppeln.

9. Vorrichtung nach Anspruch 8, bei der sich das piezoelektrische Element (75) in eine Richtung senkrecht auf die Verschieberichtung der Masse (3) erstreckt und biegsam ist, um die Feder (4) während der Kopplung zu bilden.

10. Vorrichtung (11) nach einem der vorhergehenden Ansprüche, bei der die Schnittstelle (7), die Masse (3) und die Feder (4) ein gemeinsames Element umfassen, das in einem Stück aus einem Siliziumsubstrat gebildet ist.

11. Vorrichtung nach Anspruch 10, bei der die Masse (3) ein aufgesetztes Element (13) umfasst, das auf dem einstückigen Element befestigt ist.

12. Vorrichtung nach Anspruch 10 oder 11, bei der die Feder (4) von einem biegsamen Träger gebildet ist, der in dem einstückigen Element vorgesehen ist.

13. Vorrichtung nach einem der vorhergehenden Ansprüche, bei der die Masse (3) einen Kopplungsteil (14) aufweist, der mit einer Wechselfolge von Kerben und Ausbauchungen versehen ist, wobei das Kopplungselement ein Betätigungselement (24) umfasst, das während der Kopplung in eine Kerbe des Kopplungsteils eingesetzt wird.

14. Vorrichtung nach einem der vorhergehenden Ansprüche, umfassend ein Element zur Umwandlung der mechanischen Energie der beweglichen Masse in elektrische Energie.

15. System, umfassend eine mikromechanische Verstärkungsvorrichtung nach einem der vorhergehenden Ansprüche und eine Vibrationsstütze (2), die mit der Schnittstelle der mikromechanischen Vorrichtung verbunden ist, wobei die Vibrationsstütze eine Masse aufweist, die mindestens 50-mal größer als jene der mikromechanischen Vorrichtung ist.

16. Verfahren zur Verstärkung der Bewegung eines Vibrationselements (2) durch eine mikromechanische Vorrichtung, umfassend die folgenden Schritte, darin bestehend:

- eine mikromechanische Vorrichtung (11) bereitzustellen, die mit einer beweglichen Masse (3) entlang mindestens eines Freiheitsgrades in Bezug auf das Vibrationselement versehen ist und eine Feder (4) aufweist, die geeignet ist, eine Rückstellbelastung zwischen der beweglichen Masse und dem Vibrationselement auszuüben;
- die Verschieberichtung des Vibrationselements entlang des Freiheitsgrades zu erfassen;
- die bewegliche Masse mit dem Vibrationselement zu koppeln, wenn die Verschieberichtung des Vibrationselements jener der beweglichen Masse entgegengesetzt ist, und die bewegliche Masse vom Vibrationselement vor einer Richtungsänderung des Vibrationselements und wenn die Verschieberichtung des Vibrationselements mit jener der beweglichen Masse identisch ist, zu entkoppeln.

Fig. 1

Fig. 2

Fig. 3

Fig. 4

Fig. 5a

Fig. 5b

Fig. 5c

Fig. 5d

Fig. 6

Fig. 7

Fig. 8

Fig. 9a

Fig. 9b

Fig. 9c

Fig. 9d

Fig. 9e

Fig. 10

Fig. 11

Fig. 12a

Fig. 12b

Fig. 12c

Fig. 12d

Fig. 12e

Fig. 13

Fig. 14

Fig. 15

Fig. 16

Fig. 17

Fig. 18

Fig. 20

Fig. 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 20055181

- FR 2896635 A1

**Littérature non-brevet citée dans la description**

- Energy Scavenging From Low-Frequency Vibrations by Using Frequency Up-Conversion for Wireless Sensor Applications. *IEEE SENSORS JOURNAL,* Mars 2008, vol. 8 (3